# EUROPÄISCHE PATENTANMELDUNG

(11) **EP 4 797 488 A1**
(43) Veröffentlichungstag der Anmeldung: **26.08.2026**
(21) Anmeldenummer: 25159007.1
(22) Anmeldetag: 20.02.2025
(51) Int. Cl.: H02J 7/00, B60L 53/302, H01M 10/613, H01M 10/6563

(54) **LADESYSTEM FÜR EINEN AKKUMULATOR**

(71) Anmelder: Hilti Aktiengesellschaft, 9494 Schaan (LI)
(72) Erfinder: Götz, Gregor, 95326 Kulmbach (DE); Grützner, Julian, 76131 Karlsruhe (DE); Blum, Patrick, 76133 Karlsruhe (DE); Kleinschmidt, Albert, 75031 Eppingen (DE); Ballreich, Moritz, 76131 Karlsruhe (DE)
(74) Vertreter: Hilti Aktiengesellschaft Corporate Intellectual Property

(57) **Zusammenfassung**

Die vorliegende Erfindung betrifft ein Ladesystem zum Laden zumindest eines Akkumulators für eine mobile Werkzeugmaschine, insbesondere eines Akkumulators für eine tragbare Werkzeugmaschine, enthaltend: ein Gehäuse, das einen Aufladeraum definiert, in dem an zumindest einer Ladeschnittstelle jeweils ein Akkumulator aufladbar ist, und eine Wärmeübertragereinrichtung, welche zum Übertragen von Wärmeenergie zwischen dem Aufladeraum und außerhalb des Gehäuses eingerichtet ist.

## Beschreibung

### GEBIET DER ERFINDUNG

Die vorliegende Erfindung betrifft ein Ladesystem zum Laden zumindest eines Akkumulators für eine mobile Werkzeugmaschine.

Mobile Werkzeugmaschinen lassen sich grob in die drei Hauptgruppen der quasi-stationären Werkzeugmaschinen (beispielsweise Kernbohrmaschinen oder tragbare Tischkreissägen), tragbaren Werkzeugmaschinen (beispielsweise Bohrhämmer, Handkreissägen oder Heckenscheren) und schiebbaren Werkzeugmaschinen (beispielsweise Rasenmäher oder Poliermaschinen) gliedern, wobei auch Mischformen und andere Werkzeugmaschinen, wie Bauroboter, vorkommen können. Prinzipiell lassen sich alle solche Werkzeugmaschinen mittels Akkumulatoren betreiben, wobei es sich aus Flexibilitätsgründen anbietet, standardisierte Akkumulatoren, wie Hersteller-standardisierte Akkumulatoren, zu verwenden. Die mobile Werkzeugmaschine kann tragbar sein; sie kann beispielsweise ein Gewicht von weniger als 50 kg, insbesondere von weniger als 25 kg, aufweisen.

Das Laden solcher Akkumulatoren nahe des jeweiligen Einsatzortes bietet sich an, um Laufwege zu sparen. Befindet sich der Einsatzort jedoch im Freien, kann es sein, dass eine auftretende Umgebungstemperatur niedriger oder höher als ein zulässiger Bereich einer Akkumulatortemperatur ist. Der zulässige Bereich der Akkumulatortemperatur kann beispielsweise von 0°C oder 5°C bis 35°C oder 40°C reichen. Die auftretende Umgebungstemperatur kann beispielsweise beeinflusst sein durch:
- eine Lufttemperatur, beispielsweise können Akkumulator-Temperaturen nahe und/oder unter dem Gefrierpunkt und/oder über beispielsweise 40°C beim Laden bzw. dessen Beginn unerwünscht sein,
- eine Sonneneinstrahlung, welche insbesondere während des Ladens als zusätzlicher Wärmeeintrag unerwünscht ist,
- eine Lagertemperatur des Akkumulators, beispielsweise in einem Fahrzeug, und/oder
- eine Restwärme des Akkumulators infolge eines Entladebetriebs.

Daher besteht der Wunsch zum Kühlen und/oder Wärmen eines Akkumulators. Ähnliche Bedingungen können bspw. auch auf einer Baustelle im Rohbau vorliegen.

Eine Aufgabe der vorliegenden Erfindung ist es daher, ein Ladesystem zum Kühlen und/oder Wärmen bereitzustellen.

### OFFENBARUNG DER ERFINDUNG

Demgemäß wird ein Ladesystem zum Laden zumindest eines Akkumulators für eine mobile Werkzeugmaschine vorgeschlagen, insbesondere eines Akkumulators für eine tragbare Werkzeugmaschine. Das Ladesystem hat ein Gehäuse und eine
Wärmeübertragereinrichtung. Das Gehäuse definiert einen Aufladeraum, in dem an zumindest einer Ladeschnittstelle jeweils ein Akkumulator aufladbar ist. Die Wärmeübertragereinrichtung ist zum Übertragen von Wärmeenergie zwischen dem Aufladeraum und außerhalb des Gehäuses eingerichtet ist.

Mittels der Wärmeübertragereinrichtung kann Wärmeenergie aus dem Aufladeraum nach außerhalb transportiert werden, um einen Akkumulator in dem Aufladeraum zu kühlen. Zusätzlich oder alternativ kann mittels der Wärmeübertragereinrichtung Wärmeenergie von außerhalb in den Aufladeraum transportiert werden, um einen Akkumulator in dem Aufladeraum zu wärmen. Das Gehäuse trennt zwischen innerhalb und außerhalb und konserviert so die Temperatur im Aufladeraum.

Unter dem "Akkumulator" kann man einen Speicher für elektrische Energie verstehen, der bauartgemäß zum mehrmaligen, auch teilweisen, Auf- und Entladen geeignet und bestimmt ist. Unter dem "Akkumulator für eine mobile Werkzeugmaschine" kann man einen Akkumulator verstehen, der bis zum Betrieb einer Werkzeugmaschine mit einer Nennleistung bis 10 kW bevorzugt bis 5kW und bevorzugter bis 2,5 kW dimensioniert ist. Unter dem "Akkumulator für eine mobile Werkzeugmaschine" kann man einen Akkumulator mit einer Kapazität bis 50 Ah und bevorzugter bis 20 Ah verstehen. Der Akkumulator hat eine Gegenschnittstelle, die zu der Ladeschnittstelle komplementär ist, man kann auch von gegengleichen und/oder zueinander funktional bzw. geometrisch negativen Schnittstellen sprechen.

Der Akkumulator ist beispielsweise eine Akkumulatorvorrichtung, die zumindest eine Akkumulatorzelle oder mehrere Akkumulatorzellen, ein die Akkumulatorzelle/-n umgebendes Akkumulatorgehäuse und eine an dem Akkumulatorgehäuse angeordnete Gegenschnittstelle hat. In der Akkumulatorvorrichtung kann ein Lüftungskanal zum Lüften eines Inneren des Akkumulatorgehäuses gebildet sein, um die Akkumulatorzellen zu kühlen und/oder zu wärmen. Die Akkumulatorvorrichtung kann eine Steuereinheit haben, die beispielsweise zum Steuern eines Aufladens und/oder eines Entladens der Akkumulatorzellen eingerichtet ist, beispielsweise um ein Tiefenentladen einzelner Akkumulatorzellen zu vermeiden und/oder eine Temperaturverteilung während eines Auf- und/oder Entladens zu steuern. Die Steuereinheit kann mit zumindest einem Sensor in der Akkumulatorvorrichtung verbunden sein, um diesen auszulesen, beispielsweise einem Spannungssensor und/oder einem Temperatursensor. Es kann sein, dass der Lüftungskanal zum Umströmen zumindest eines Teils der Akkumulatorzelle/-n angeordnet ist. wobei der Lüftungskanal vorzugsweise eine Mündung und noch bevorzugter beide Mündungen im Bereich der Gegenschnittstelle hat.

Unter dem "Ladesystem" kann man verstehen, dass das Gehäuse, die Ladeschnittstelle und die Wärmeübertragereinrichtung zumindest aufeinander abgestimmt sind. Es kann sein, dass ein Akkumulator Teil des Ladesystems ist, jedoch ist jeder Akkumulator zweckgemäß von dem Ladesystem trennbar. Das Ladesystem kann weitere Dinge enthalten, beispielsweise ein Netzkabel oder eine Ladeschnittstelle zum mechanischen Koppeln mit einem Stapelsystem, wie sie beispielsweise sogenannte System-Werkzeugkoffer haben.

Unter der "Ladeschnittstelle" kann man eine standardisierte und/oder proprietäre Schnittstelle zum Koppeln eines Akkumulators verstehen. Unter dem "Koppeln" kann man im Allgemeinen Fall eine Verbindung mechanischer, elektrischer, fluidtechnischer, und/oder steuerungstechnischer Art verstehen. Im speziellen Fall der Ladeschnittstelle handelt es sich bei dem "Koppeln" um eine Verbindung zumindest mechanischer und elektrischer Art. Unter einem "gekoppelten Zustand der Ladeschnittstelle" kann man verstehen, dass ein Akkumulator an die Ladeschnittstelle gekoppelt ist, und zwar mittels der Ladeschnittstelle und der Gegenschnittstelle. Es kann sein, dass in dem "gekoppelten Zustand der Ladeschnittstelle" der Akkumulator durch das Ladegerät geladen wird.

Das Gehäuse kann geöffnet und geschlossen werden. Es kann beispielsweise ein Deckel und/oder eine obenliegende und/oder seitliche Klappe vorhanden sein. Es kann sein, dass das Gehäuse, einschließlich der Wärmeübertragereinrichtung, in geschlossenem Zustand eine Schutzart IPX4 oder höher gemäß DIN EN 60529 und/oder gemäß ISO 20653 und/oder eine entsprechende Anforderung erfüllt. Damit kann das Ladesystem auch bei Regenwetter im Freien und/oder auf einer Baustelle in der Nähe wasserführender Geräte (bspw. wassergekühlte/-geschmierte Kernlochbohrarbeiten) verwendet werden.

Es kann sein, dass das Gehäuse, einschließlich der Wärmeübertragereinrichtung, luftdicht schließt. Somit kann ein entweichen gekühlter/erwärmter Luft nach außen besonders effektiv vermieden werden.

Es kann sein, dass die Wärmeübertragereinrichtung eine Peltier-Einrichtung, eine Heatpipe-Einrichtung und/oder eine Kompressor-Kühl-Einrichtung hat. Die genannten Wärmeübertragereinrichtungen verwenden zuverlässige Technologien. Peltier-Einrichtungen zeichnen sich durch den Verzicht auf bewegte Teile aus, und sind daher sehr tolerant gegen Erschütterungen beim Transport oder unsachgemäße Behandlung. Heatpipes (mit innenliegendem Gewebeband zur Orientierungs-Toleranz) sind passive Elemente, die zum eigentlichen Wärmetransport keine Energie benötigen. Kompressor-Kühl-Einrichtungen haben die meisten konstruktiven Freiheitsgrade.

Es kann sein, dass die Wärmeübertragereinrichtung in und/oder an einem Deckel des Gehäuses angeordnet ist. Es ist davon auszugehen, dass der Deckel zum Zugreifen-Können auf einen Akkumulator im Aufladeraum frei gehalten wird, sodass ein guter Wärmeübergang in die Umgebung gewährleistet werden kann. Sicherheitshalber kann man eine entsprechend hinweisende Beschriftung des Deckels vorsehen.

Es kann sein, dass der Deckel um ein Scharnier verschwenkbar ist, sodass der Deckel nach einem Öffnen aufgeräumt ist, und ein Benutzer sofort wieder eine Hand frei hat. Es kann sein, dass der Deckel abnehmbar ist, sodass ein Benutzer den Deckel zwischen unterschiedlichen Gehäusen tauschen kann. Es kann sein, dass ein Deckel um ein lösbares bzw. werkzeuglos lösbares Scharnier verschwenkbar ist, sodass ein Benutzer zwischen einem Verschwenken und einem Lösen des Deckels flexibel wählen kann.

Es kann sein, dass zumindest eine Ladeschnittstelle an dem Deckel angeordnet ist. Dies kann Vorteile in der Handhabung bieten, weil der Deckel als Träger für den Akkumulator / die Akkumulatoren einsetzbar ist. Außerdem kann man mehr Akkumulatoren zugreifbar verstauen, wenn eine "untere Schicht" an Gehäuse-Wanne festen Schnittstellen und eine "obere Schicht" an Gehäuse-Deckel festen Schnittstellen vorhanden sind. Außerdem kann man somit beim Öffnen des Deckels direkt auf einen am Deckel gekoppelten Akkumulator zugreifen.

Es kann sein, dass die Wärmeübertragereinrichtung außerhalb des Gehäuses einen Radiator hat, welcher vorzugsweise Luft-durchströmbar geformt und mit einer Gebläseeinrichtung in Reihe geschaltet ist. Der Radiator verbessert einen Wärmeübergang zwischen der Umgebungsluft und der Wärmeübertragereinrichtung. Der Radiator kann beispielsweise mittels eines Gitters vor Beschädigungen geschützt werden. Ein abnehmbares Gitter kann ein Reinigen erleichtern. Die Gebläseeinrichtung kann einen Wirkungsgrad verbessern.

Es kann sein, dass die Wärmeübertragereinrichtung innerhalb des Gehäuses einen Radiator hat, welcher vorzugsweise Luft-durchströmbar geformt und mit einer Gebläseeinrichtung in Reihe geschaltet ist. Der Radiator verbessert einen Wärmeübergang zwischen der Luft im Aufladeraum und der Wärmeübertragereinrichtung. Der Radiator kann beispielsweise mittels eines Gitters vor Beschädigungen geschützt werden. Ein abnehmbares Gitter kann ein Reinigen erleichtern. Die Gebläseeinrichtung kann einen Wirkungsgrad verbessern.

Es kann sein, dass das Ladesystem einen mit der Gebläseeinrichtung in Reihe geschalteten Raum oder Kanal enthält, in welchem eine Leistungselektronik angeordnet ist. Somit kann die Wärmeübertragereinrichtung zum Kühlen der Elektronik verwendet werden, wodurch deren Wirkungsgrad steigen kann. Außerdem kann eine Abwärme der Leistungselektronik zum Wärmen eines gekoppelten Akkumulators verwendet werden.

Es kann sein, dass die Gebläseeinrichtung mit einer an der Ladeschnittstelle angeordnet Lüftungsöffnung in Reihe geschaltet ist, um Luft durch einen an die Ladeschnittstelle gekoppelten Akkumulator fördern zu können. Mit anderen Worten kann es sein, dass die Gebläseeinrichtung mit einer an der Ladeschnittstelle angeordnet Lüftungsöffnung in Reihe geschaltet ist, um in dem Fall, dass ein Akkumulator mit einer (die Lüftungsöffnung der Ladeschnittstelle) über-/deckenden Lüftungsöffnung (der Gegenschnittstelle) an die Ladeschnittstelle gekoppelt ist, Luft durch einen an die Ladeschnittstelle gekoppelten Akkumulator zu fördern. Es wird also vorgeschlagen, eine gekühlte und/oder erwärmte Luft durch den Akkumulator zu leiten. Dies bewirkt ein Umspülen der Zellen des Akkumulators, sodass die Zellen schneller und effizienter gekühlt / erwärmt werden.

Es kann sein, dass mehreren Ladeschnittstellen jeweils eine mit deren Lüftungsöffnung in Reihe geschaltete Gebläseeinrichtung zugeordnet ist, wobei das Ladesystem dazu eingerichtet ist, eine Gebläseeinrichtung in Abhängigkeit eines Kopplungszustand der entsprechenden Ladeschnittstelle zu betreiben. Es wird also vorgeschlagen, dass die gekühlte/erwärmte Luft nur durch die Ladeschnittstellen ausgegeben wird, an welche in diesem Moment ein Akkumulator bzw. ein geeigneter Akkumulator mit entsprechendem Lüftungskanal gekoppelt ist. Dies verbessert einen Wirkungsgrad. Es kann sein, dass eine Kopplung elektronisch erfasst und die jeweilige Gebläseeinrichtung elektronisch angesteuert wird. Es kann sein, dass eine Kopplung mechanisch mittels eines Tasters erfasst und die jeweilige Gebläseeinrichtung mechanisch mittels eines (bspw. federvorbelasteten) Schalters ein- und ausgeschalten wird. Diese Liste ist nicht abschließend.

Es kann sein, dass das Ladesystem eine Steuereinrichtung enthält, welche dazu eingerichtet ist, eine Temperatur eines an die Ladeschnittstelle gekoppelten Akkumulators oder jedes an eine der Ladeschnittstellen gekoppelten Akkumulators zu erfassen und einen Betrieb der Wärmeübertragereinrichtung in Abhängigkeit der erfassten Temperatur oder Temperaturen zu steuern. Man kann dies als Regeln oder Rückmeldungssteuern bezeichnen. Man kann auch von einer Ist-Akkumulator-Temperatur-basierten Steuerung der Wärmeübertragereinrichtung sprechen. Dies bewirkt, dass nicht zu viel Energie für ein Kühlen oder Wärmen verbraucht wird.

Es kann sein, dass das Ladesystem eine oder die Steuereinrichtung enthält, welche dazu eingerichtet ist, einen Ladestrom zu der zumindest einen Ladeschnittstelle zu erfassen und einen Betrieb der Wärmeübertragereinrichtung in Abhängigkeit des erfassten Ladestroms zu steuern. Wenn mehr Ladestrom zum Aufladen eines Akkumulators oder mehrerer Akkumulatoren verwendet wird, erzeugt dies häufig mehr Wärme, sodass mehr Wärme aus dem Ladesystem abgeführt werden sollte. Andererseits kann ein Kühlen von Akkumulatoren auf eine zu niedrige Temperatur ein effizientes Laden verhindern. Auch diese Option bietet also einen Effizienzgewinn.

Es kann sein, dass in dem Gehäuse unter der Wärmeübertragereinrichtung eine Kondenswasser-Auffangeinrichtung angeordnet ist. Bei hoher Luftfeuchtigkeit und hohen Temperaturdifferenzen (bspw. 35°C Außentemperatur und 15°C Innentemperatur des Aufladeraums) kann es im Verlauf eines Arbeitstags zu Kondenswasserbildung kommen. Die Kondenswasser-Auffangeinrichtung kann beispielsweise als eine Platte unter dem Radiator ausgeführt sein, welche beim Aufklappen nach außerhalb des Gehäuses abkippt. Somit wird ein Kondenswasser von der Ladeschnittstelle ferngehalten.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird die Fachperson auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: schematisch eine perspektivische geschnittene Ansicht eines Ladesystems gemäß einer Ausführungsform der Erfindung, wobei sich in einem Aufladeraum eines Gehäuses mehrere Akkumulatoren befinden; und
- Fig. 2: schematisch eine andere perspektivische geschnittene Ansicht des Ladesystems gemäß der Ausführungsform der Erfindung.

Gleiche oder funktionsgleiche Elemente werden durch gleiche Bezugszeichen in den Figuren indiziert, soweit nichts anderes angegeben ist.

### AUSFÜHRUNGSFORMEN DER ERFINDUNG

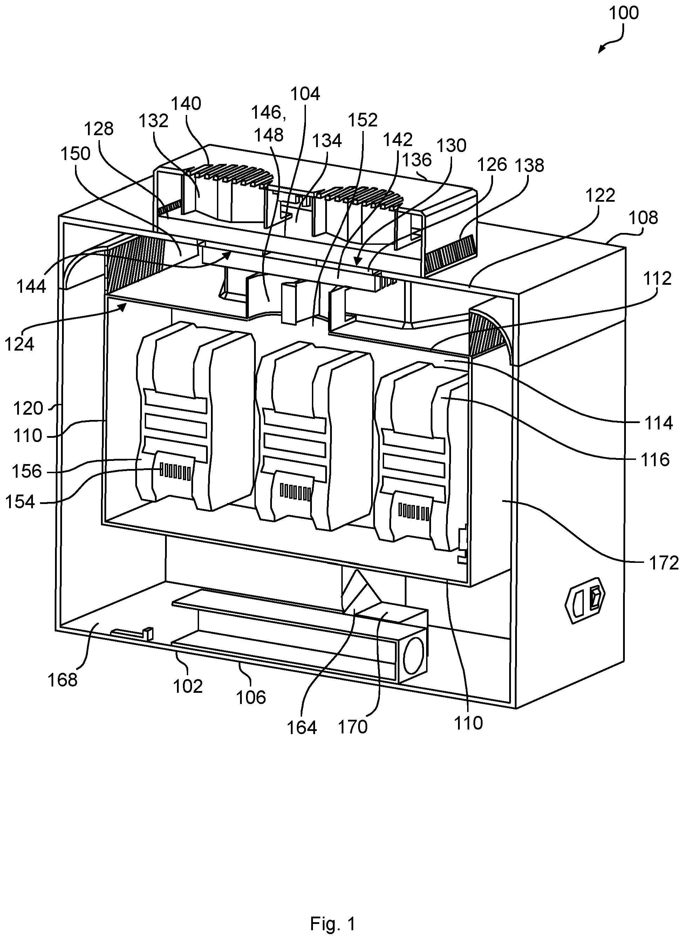

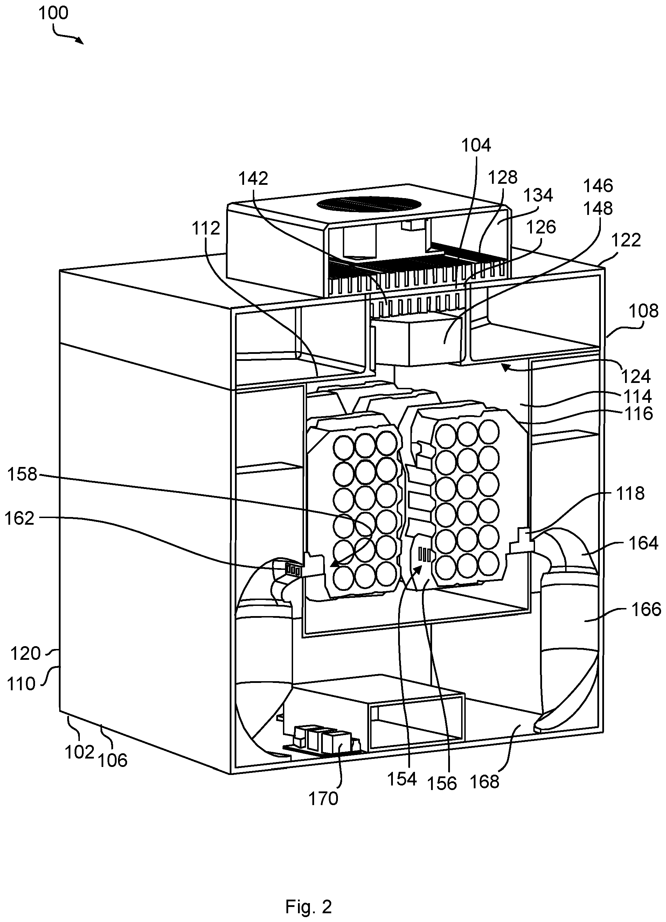

Die Fig. 1 und Fig. 2 zeigen ein Ladesystem 100 gemäß einer Ausführungsform der Erfindung in zwei zueinander queren Schnittansichten. Das Ladesystem 100 hat zumindest ein Gehäuse 102 und eine Wärmeübertragereinrichtung 104. Das Ladesystem 100 kann weitere Komponenten haben.

Das Gehäuse 102 hat beispielsweise eine Wanne 106 und einen Deckel 108. Das Gehäuse 102 ist in diesem Beispiel doppelwandig ausgeführt, aber das ist optional. Innenwände 110 (seitliche Wände und Bodenwand) der doppelwandigen Wanne 106, sowie eine Innenwand 112 (Deckenwand) des Deckel 108 definieren gemeinsam einen Aufladeraum 114. Der Aufladeraum 114 ist zum Aufbewahren zumindest eines Akkumulators 116 dimensioniert. Vorliegend ist der Aufladeraum 114 zum Aufbewahren von sechs Akkumulatoren 116 dimensioniert. Die Akkumulatoren 116 sind jeweils zum Energieversorgen einer mobilen Werkzeugmaschine ausgelegt und dimensioniert. Der Deckel 108 ist um ein (nicht gezeigtes) Scharnier klappbar, und das Scharnier ist aushängbar, um den Deckel 108 abnehmen zu können.

In dem Aufladeraum 114 ist mindestens eine Ladeschnittstelle 118 vorhanden, vorliegend sind es sechs Ladeschnittstellen 118. Eine Ladeschnittstelle 118 ist zum mechanischen und elektrischen Koppeln eines Akkumulators 116 eingerichtet.

Der Deckel 108 und die Wanne 106 schließen zusammenwirkend das Gehäuse 102 luftdicht ab. Konkret hat das Gehäuse 102 beispielsweise keine unverschlossenen Durchgänge durch Außenwände 120 (seitliche Wände und Bodenwand) der Wanne 106 und Außenwände 122 (seitliche Wände und Deckenwand) des Deckels 108. Die Außenwände 120 der Wanne 106 habe in einer Betriebslage oben ein Eingriffsöffnung 124, welche beispielsweise durch eine Gummidichtung (nicht gezeigt) umgeben ist, um zusammenwirkend mit den Außenwänden 122 des Deckels 108 luftdicht schließbar zu sein.

Die Wärmeübertragereinrichtung 104 ist in dem Deckel 108 angeordnet. Die Wärmeübertragereinrichtung 104 hat mehrere parallel geschaltete Peltier-Elemente 126. Weil es also eine Peltier-Einrichtung ist, ist kein Luftaustausch durch den Deckel 108 vorgesehen. Die Wärmeübertragereinrichtung 104 schließt den Deckel 108 daher luftdicht.

Die Wärmeübertragereinrichtung 104 hat einen äußeren Radiator 128, der mit einer jeweiligen äußeren Wärmeübertragungsfläche 130 der Peltier-Elemente 126 wärmeübertragbar verbunden ist. "Außen" bzw. "äußere" bezieht sich auf die das Gehäuse 102 luftdicht schließenden Außenwände 120, 122. Eine äußere Gebläseeinrichtung 132 ist mit dem äußeren Radiator 128 in Reihe geschaltet, um einen Umgebungsluftstrom durch den äußeren Radiator 128 und/oder an diesem entlangzufördern. Die äußere Gebläseeinrichtung 132 wird beispielsweise durch zwei parallel geschaltete, axial wirkende Ventilatoren gebildet. Der äußere Radiator 128 und die äußere Gebläseeinrichtung 132 sind in einem Raum 134 zwischen einer Außenwand 122 des Deckels 108 und einer Schutzhaube 136 angeordnet. Die Schutzhaube 136 hat Eintrittsöffnungen 138 und Austrittsöffnungen 140 zum Ein- und Austritt von Umgebungsluft. Somit erzwingt die äußere Gebläseeinrichtung 132 einen gerichteten Luftstrom von Umgebungsluft durch die Eintrittsöffnungen 138 in den Raum 134, dann in dem Raum 134 durch den äußeren Radiator 128 und durch die äußere Gebläseeinrichtung 132, und schließlich durch die Austrittsöffnungen 140 aus dem Raum 134 heraus.

Die Wärmeübertragereinrichtung 104 hat einen inneren Radiator 142, der mit einer jeweiligen, inneren Wärmeübertragungsfläche 144 der Peltier-Elemente 126 wärmeübertragbar verbunden ist. Eine innere Gebläseeinrichtung 146 ist mit dem inneren Radiator 142 in Reihe geschaltet, um einen Binnenluftstrom durch den inneren Radiator 142 und/oder an diesem entlangzufördern. "Innen" bzw. "innere" bezieht sich auf die das Gehäuse 102 luftdicht schließenden Außenwände 120, 122.

Eine einfache Bauform für die Radiatoren 128, 142 sind Plattenstapel mit Luftkanälen zwischen den Platten und/oder Kamm-förmigen Platten. Als Materialien kommen beispielsweise Aluminium, das einen guten Kompromiss aus Wärmeleitfähigkeit und Gewicht hat, und/oder Kupfer, das sehr wärmeleitfähig ist, bevorzugt in Betracht. Es kann sein, dass die Radiatoren 128, 142 Heatpipes enthalten. Es kann sein, dass der innerer Radiator 142 und der äußere Radiator 128 unterschiedliche Bauarten haben, aber eine gleiche Bauart ist bevorzugt.

Es kann sein, dass die innere Gebläseeinrichtung 146 einen axial wirkenden Ventilator 148 hat, der in/an dem Deckel 108 angeordnet ist. Beispielsweise sind der innere Radiator 142 und der Ventilator 148 in einem Zwischenraum 150 untergebracht, welcher zwischen Außenwänden 122 des Deckels 108 und einer Innenwand 112 des Deckels 108 (siehe Fig. 1) gebildet ist. Von dort strömt die Luft durch einen Deckeldurchtritt 152 in den Aufladeraum 114 (siehe Fig. 1 & 2).

Von dem Aufladeraum 114 tritt die Luft durch Lüftungsöffnungen 154 in einem Boden 156 eines jeweiligen Akkumulators 116 in diesen Akkumulator 116 ein (siehe Fig. 1 & 2), um die Zellen des Akkumulators 116 zumindest teilweise zu umströmen. Die Luft tritt durch Lüftungsöffnungen 158 des Akkumulators 116 aus dem Akkumulator 116 aus (siehe Fig. 2). Diese Lüftungsöffnungen 158 sind Teil der Gegenschnittstelle 160, welche zu der Ladeschnittstelle 118 komplementär ist.

Von dort wird die Luft durch Kanäle 162 (d.h. Lüftungsöffnungen) in der jeweiligen Ladeschnittstelle 118 in einen Strömungskanal 164 geleitet, der zwischen einer (seitlichen) Innenwand 110 der Wanne 106 und einer (seitlichen) Außenwand 120 der Wanne 106 angeordnet ist (siehe Fig. 2). Es kann sein, dass in dem Strömungskanal 164 ein weiterer Lüfter 166, beispielsweise ein axial wirkender Ventilator, angeordnet ist. Zu bemerken ist, dass die Fig. 1 & 2 aus Darstellungsgründen nicht alle Strömungskanäle 164 zeigen.

Zwischen der äußeren Bodenwand (einer Außenwand 120 der Wanne 105) und der inneren Bodenwand (einer Innenwand 110 der Wanne 105) befindet sich ein Fach 168 für Leistungselektronik 170. Die Leistungselektronik 170 dient beispielsweise der Stromversorgung der Ladeschnittstellen 118 und der Wärmeübertragereinrichtung 104, d.h. beispielsweise der Peltier-Elemente 126 und der Gebläseeinrichtungen 132, 146 einschließlich der Ventilatoren 148 und Lüfter 166. Die Strömungskanäle 164 münden in das Fach 168, sodass die Leistungselektronik 170 im erzeugten Luftstrom liegt (siehe Fig. 1 & 2). Von dem Fach 168 aus führen andere Strömungskanäle 172 bis in den Deckel 108 und münden dort in den beschriebenen Zwischenraum 150 (siehe Fig. 1).

Die innere Gebläseeinrichtung 146 hat die Ventilatoren 148 und Lüfter 166. Die innere Gebläseeinrichtung 146 kann auch Lüfter in den Ladeschnittstellen 118 haben. Die innere Gebläseeinrichtung 146 kann auch nur einen Teil dieser Ventilatoren und Lüfter haben. Vorzugsweise wird durch die Gebläseeinrichtung 146 sichergestellt, dass jeder Akkumulator 116, der in den Aufladeraum 114 aufgenommen oder aufnehmbar ist, durchströmt und/oder umströmt und/oder angeströmt wird. Der dargestellte Strömungspfad Radiator 142 - Aufladeraum 114 - Akkumulatoren 116 - Fach 168 für Leistungselektronik 170 - Radiator 142 kann in dieser Reihenfolge oder in entgegengesetzter Reihenfolge durchströmt werden. Es kann auch sein, das Teile davon parallel und/oder nicht durchströmt werden.

In dem Fach 168 ist auch ein Steuergerät angeordnet, das eine Steuerung des Ladesystems 100 übernimmt, insbesondere der Lüfter 166. Beispielsweise ist die Steuerung dazu programmiert, die Lüfter 166 der inneren Gebläseeinrichtung 146 in Abhängigkeit eines Kopplungszustand der entsprechenden Ladeschnittstellen 118 zu betreiben. Mit anderen Worten, es wird nur durch solche Ladeschnittstellen 118 Luft geleitet, an welchen ein Akkumulator 116 gekoppelt ist.

Obwohl die vorliegende Erfindung anhand von Ausführungsbeispielen beschrieben wurde, ist sie vielfältig modifizierbar.

### BEZUGSZEICHENLISTE

- 100: Ladesystem
- 102: Gehäuse
- 104: Wärmeübertragereinrichtung
- 106: Wanne
- 108: Deckel
- 110: Innenwand der Wanne (z.B. seitliche Wände, Bodenwand)
- 112: Innenwand des Deckels (z.B. Deckenwand)
- 114: Aufladeraum
- 116: Akkumulator
- 118: Ladeschnittstelle
- 120: Außenwand der Wanne (z.B. seitliche Wände, Bodenwand)
- 122: Außenwand des Deckels (z.B. seitliche Wände, Deckenwand)
- 124: Eingriffsöffnung
- 126: Peltier-Element
- 128: äußerer Radiator
- 130: äußere Wärmeübertragungsfläche
- 132: äußere Gebläseeinrichtung
- 134: Raum
- 136: Schutzhaube
- 138: Eintrittsöffnung in Schutzhaube
- 140: Austrittsöffnung aus Schutzhaube
- 142: innerer Radiator
- 144: innere Wärmeübertragungsfläche
- 146: innere Gebläseeinrichtung
- 148: Ventilator in Deckel
- 150: Zwischenraum in Deckel
- 152: Deckeldurchtritt
- 154: Lüftungsöffnung in einem Boden eines Akkumulators
- 156: Boden eines Akkumulators
- 158: Lüftungsöffnung einer Gegenschnittstelle
- 160: Gegenschnittstelle eines Akkumulators
- 162: Lüftungsöffnung (Kanal)
- 164: Strömungskanal
- 166: Lüfter
- 168: Fach für Leistungselektronik
- 170: Leistungselektronik
- 172: Strömungskanal

## Patentansprüche

1. Ladesystem (100) zum Laden zumindest eines Akkumulators (116) für eine mobile Werkzeugmaschine, insbesondere eines Akkumulators (116) für eine tragbare Werkzeugmaschine, enthaltend:
ein Gehäuse (102), das einen Aufladeraum (114) definiert, in dem an zumindest einer Ladeschnittstelle (118) jeweils ein Akkumulator (116) aufladbar ist,
**dadurch gekennzeichnet, dass**
das Ladesystem (100) eine Wärmeübertragereinrichtung (104) hat, welche zum Übertragen von Wärmeenergie zwischen dem Aufladeraum (114) und außerhalb des Gehäuses (102) eingerichtet ist.

2. Ladesystem (100) nach Anspruch 1, wobei das Gehäuse (102), einschließlich der Wärmeübertragereinrichtung (104), luftdicht schließt.

3. Ladesystem (100) nach Anspruch 1 oder 2, wobei die Wärmeübertragereinrichtung (104) eine Peltier-Einrichtung (126), eine Heatpipe-Einrichtung und/oder eine Kompressor-Kühl-Einrichtung hat.

4. Ladesystem (100) nach einem der Ansprüche 1 bis 3, wobei die Wärmeübertragereinrichtung (104) in und/oder an einem Deckel (108) des Gehäuses (102) angeordnet ist.

5. Ladesystem (100) nach Anspruch 4, wobei der Deckel (108) um ein Scharnier verschwenkbar ist.

6. Ladesystem (100) nach Anspruch 4 oder 5, wobei der Deckel (108) abnehmbar ist.

7. Ladesystem (100) nach einem der Ansprüche 4 bis 6, wobei zumindest eine Ladeschnittstelle (118) an dem Deckel (108) angeordnet ist

8. Ladesystem (100) nach einem der vorigen Ansprüche, wobei die Wärmeübertragereinrichtung (104) außerhalb des Gehäuses (102) einen Radiator (128) hat, welcher vorzugsweise Luft-durchströmbar geformt und mit einer Gebläseeinrichtung (132) in Reihe geschaltet ist.

9. Ladesystem (100) nach einem der vorigen Ansprüche, wobei die Wärmeübertragereinrichtung (104) innerhalb des Gehäuses (102) einen Radiator (142) hat, welcher vorzugsweise Luft-durchströmbar geformt und mit einer Gebläseeinrichtung (146, 148, 166) in Reihe geschaltet ist.

10. Ladesystem (100) nach Anspruch 9, enthaltend einen mit der Gebläseeinrichtung (146, 148, 166) in Reihe geschalteten Raum (168) oder Kanal, in welchem eine Leistungselektronik (170) angeordnet ist.

11. Ladesystem (100) nach Anspruch 9 oder 10, wobei die Gebläseeinrichtung (146, 148, 166) mit einer an der Ladeschnittstelle (118) angeordnet Lüftungsöffnung (162) in Reihe geschaltet ist, um Luft durch einen an die Ladeschnittstelle (118) gekoppelten Akkumulator (116) fördern zu können.

12. Ladesystem (100) nach Anspruch 11, wobei mehreren Ladeschnittstellen (118) jeweils eine mit deren Lüftungsöffnung (162) in Reihe geschaltete Gebläseeinrichtung (146, 166) zugeordnet ist, wobei das Ladesystem (100) dazu eingerichtet ist, eine Gebläseeinrichtung (146, 166) in Abhängigkeit eines Kopplungszustand der entsprechenden Ladeschnittstelle (118) zu betreiben.

13. Ladesystem (100) nach einem der vorigen Ansprüche, enthaltend eine Steuereinrichtung, welche dazu eingerichtet ist, eine Temperatur eines an die Ladeschnittstelle (118) gekoppelten Akkumulators (116) oder jedes an eine der Ladeschnittstellen (118) gekoppelten Akkumulators (116) zu erfassen und einen Betrieb der Wärmeübertragereinrichtung (104) in Abhängigkeit der erfassten Temperatur oder Temperaturen zu steuern.

14. Ladesystem (100) nach einem der vorigen Ansprüche, enthaltend eine oder die Steuereinrichtung, welche dazu eingerichtet ist, einen Ladestrom zu der zumindest einen Ladeschnittstelle (118) zu erfassen und einen Betrieb der Wärmeübertragereinrichtung (104) in Abhängigkeit des erfassten Ladestroms zu steuern.

15. Ladesystem (100) nach einem der vorigen Ansprüche, wobei innen unter der Wärmeübertragereinrichtung (104) eine Kondenswasser-Auffangeinrichtung angeordnet ist.
